# EUROPEAN PATENT SPECIFICATION

(11) **EP 1 053 819 B1**
(45) Date of publication and mention of the grant of the patent: **12.05.2004**
(21) Application number: 00100290.6
(22) Date of filing: 20.01.2000
(51) Int. Cl.: B23K 11/24

(54) **Resistance-welding unit, particularly for high-current welding**
Widerstandsschweisseinheit, insbesondere zum Schweissen mit hohem Strom
Unité de soudage par résistance, en particulier pour soudage avec courant élevé

(30) Priority: 19.05.1999 IT BO990268
(43) Date of publication of application: 22.11.2000
(73) Proprietor: TECNA S.p.A., 40024 Castel San Pietro Terme (Bologna) (IT)
(72) Inventor: Amadori, Ezio, 40024 Castel San Pietro Terme (Bologna) (IT)
(74) Representative: Modiano, Guido, Dr.-Ing.

(56) References cited:
- US-A- 4 734 556
- US-A- 5 229 567

## Description

The present invention relates to a resistance-welding unit, particularly for high-current welds, according to the preamble of claim 1, see e.g. US-A-4 734 556.

It is known that various types of welding unit are currently commercially available and are used in particular in small industries and by craftsmen for welding light alloys (for example in car body shops) which have the severe drawback of requiring, for welding, very high currents with respect to the conventional currents for welding steels, steel alloys and the like. This forces the user to apply to the company that supplies electric power for a considerable allocation of such power in order to be able to work effectively in the welding of light alloys, such as for example aluminum alloys, which are particularly used in the automotive field.

Another drawback, in view of the usual high current values required to weld light alloys, is the instantaneous power dissipated in the conducting cables that connect the welding unit to the welding gun.

The aim of the present invention is to eliminate the above-noted drawbacks by providing a resistance-welding unit which allows to use the same available mains power to meet very different requirements, such as for example the welding of steel plates and the welding of light alloys.

Within the scope of this aim, an object of the present invention is to provide a welding unit which is flexible in use and allows a wide performance range.

Another object of the present invention is to achieve the above aim and object with a structure which is simple, relatively easy to provide in practice, safe in use, effective in operation and has a relatively low cost by using commonly commercially available electrical and electronic components.

This aim, these objects and others which will become apparent hereinafter are achieved by a resistance-welding unit, particularly for high-current welding, which comprises an inverter which is powered by a three-phase electric power source and is adapted to provide in output an AC voltage whose frequency is preset by welding control means, said inverter being series-connected to a first step-down transformer whose output terminals are connected to current rectifier means for supplying, through first conductors, a first welding gun, characterized in that it comprises selector means which are arranged between said inverter and said first step-down transformer in order to supply power to a second welding gun which accommodates electric means suitable to supply a DC current to said second welding gun.

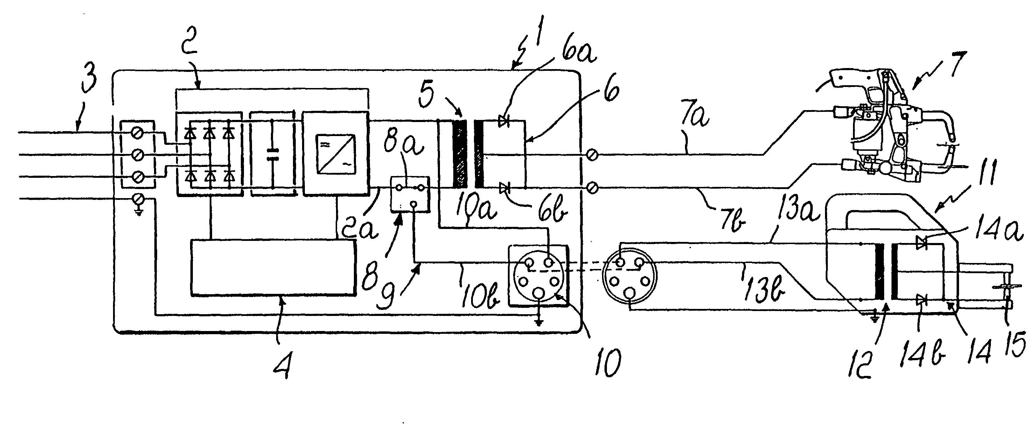

Further characteristics and advantages of the present invention will become apparent from the following detailed description of a preferred but not exclusive embodiment of a resistance-welding unit according to the invention, illustrated only by way of non-limitative example in the accompanying drawings, wherein the only figure is an electrical diagram of the resistance-welding unit of the present invention.

With reference to the above figure, 1 generally designates the electrical diagram of a resistance-welding unit, particularly for high-current welding, according to the invention.

The electrical diagram is constituted by an inverter 2 whose input is connected to a three-phase electric power source 3 and which can be driven by welding control means 4 which are suitable to determine the frequency of the AC voltage in output from the inverter 2.

The inverter 2 is series-connected to a first step-down transformer 5 of the central-tap type, whose output is connected to current rectifier means 6 which are constituted, for example, by two diodes 6a and 6b which are connected by means of first conductors 7a and 7b to a first welding gun, generally designated by the reference numeral 7.

An auxiliary circuit 9 branches off between the output of the inverter 2 and the first transformer 5 and is composed of a terminal strip 10, two cables 10a and 10b and selection means 8 which comprise a switch 8a arranged on an output terminal 2a of the inverter 2. The switch 8a is adapted to connect the output terminal 2a to the first conductor 7b or to the conductor 10b. In the latter position, the switch enables the supply of power to electrical means accommodated in a second welding gun 11.

The electrical means comprise a second step-down transformer 12 of the central-tap type, whose input can be connected to the auxiliary circuit 9 by means of second conductors 13a and 13b which have a smaller cross-section than the first conductors 7a and 7b; the output of the second transformer 12 is connected to a current rectifier device 14, for example of the full-wave type, which is constituted by two diodes 14a and 14b which are connected in output to electrodes 15 of the second gun 11.

During operation with the switch 8a arranged so as to disconnect the auxiliary circuit 9, conventional welding is performed. The first step-down transformer 5 in fact draws, at the output of the inverter 2, an AC voltage whose frequency is for example 1000 Hz and whose effective value is 500 V. Such voltage, stepped down by the first transformer 5 and rectified by the rectifier means 6, is made available to the first gun 7, with values for example of 15 V, so as to supply a DC current whose intensity is suitable for welding steel plates and alloys, for example 8000 A.

When higher current intensities are required, the switch 8 is used to enable the second welding gun 11, which is connected, by means of the second conductors 13a and 13b and the auxiliary circuit 9, to the output of the inverter 2, receiving an AC voltage which has, for example, an effective value of 500 V and a frequency of 1000 Hz. By means of the second step-down transformer 12 and of the rectifier 14, DC voltage values of 6 V and DC current values of 20000 A, for example, are produced which allow to weld aluminum alloys characterized by lower resistance values than steel.

This allows, for an equal power installed by the supplier, to weld aluminum alloys; this would not be possible with the first welding gun 7 due to the limited installed power. In particular, it should be noted that the installation of the second transformer 12 in the second welding gun 11 on the one hand determines an increase in the weight of the gun, but on the other hand allows to reduce the cross-section of the second conductors 13a and 13b, making the second gun 11 easier to handle. Finally, shortening the connection between the rectifier device 14 and the electrodes 15 of the second welding gun 11 reduces the path of the current, thus allowing to reduce losses substantially.

In practical operation, by means of the switch 8a it is possible to choose to use the first welding gun 7 to weld conventional metal plates, steel alloys and the like, or by switching to the auxiliary circuit 9 it is possible to conveniently choose to weld aluminum alloys without resorting to an increase in the installed electric power.

It has thus been observed that the invention achieves the intended aim and objects.

The invention thus conceived is susceptible of numerous modifications and variations, all of which are within the scope of the inventive concept, as defined by the appended claims.

All the details may further be replaced with other technically equivalent ones. In practice, the materials employed, as well as the shapes and the

dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A resistance-welding unit (1), particularly for high-current welding, comprising an inverter (2) which is powered by a three-phase electric power source (3) and is adapted to provide in output an AC voltage whose frequency is preset by welding control means, said inverter (2) being series-connected to a first step-down transformer (5) whose output terminals are connected to current rectifier means (6) for supplying, through first conductors (7a,7b), a first welding gun (7), **characterized in that** it comprises selector means (8) which are arranged between said inverter (2) and said first step-down transformer (5) in order to supply power to a second welding gun (11) which accommodates electrical means (12,14) which are suitable to supply a DC current to said second welding gun (11).

2. The resistance-welding unit according to claim 1, **characterized in that** said selector means (8) comprise a switch (8a) for enabling an auxiliary circuit (9), said switch (8a) being adapted to connect said auxiliary circuit (9) to the output of said inverter (2).

3. The resistance-welding unit according to claim 2, **characterized in that** said electrical means (14) comprise a second step-down transformer (12) which is connected in input, by means of second conductors (13a,13b), to said auxiliary circuit (9) and in output to a current rectifier device (14), which is connected in output to electrodes (15) of said second welding gun (11), said second transformer (12) and said rectifier device (14) being accommodated in said second welding gun (11).

4. The resistance-welding unit according to claim 3, **characterized in that** said second transformer (12) is of the central-tap type and **in that** said current rectifier device (14) is of the type with two half-waves.

## Patentansprüche

1. Widerstandsschweißeinheit (1), insbesondere zum Schweißen mit hohem Strom, die einen Inverter (2) umfasst, der durch eine dreiphasige elektrische Leistungsquelle (3) mit Leistung versorgt wird und der so ausgelegt ist, dass er am Ausgang eine Wechselspannung bereitstellt, deren Frequenz durch ein Schweißsteuermittel voreingestellt ist, wobei der Inverter (2) mit einem ersten Abwärtstransformator (5) in Reihe geschaltet ist, dessen Ausgangsanschlüsse mit einem Stromgleichrichtermittel (6) zum Speisen einer ersten Schweißpistole (7) über erste Leiter (7a, 7b) verbunden sind, **dadurch gekennzeichnet, dass** sie Selektormittel (8) umfasst, die zwischen dem Inverter (2) und dem ersten Abwärtstransformator (5) angeordnet sind, um eine zweite Schweißpistole (11) mit Leistung zu versorgen, welche elektrische Mittel (12, 14) beinhaltet, die geeignet sind, um der zweiten. Schweißpistole (11) einen Gleichstrom zuzuführen.

2. Widerstandsschweißeinheit nach Anspruch 1, **dadurch gekennzeichnet, dass** die Se-Lektormittel (8) einen Schalter (8a) zum Einschalten einer Hilfsschaltung (9) umfassen, wobei der Schalter (8a) so ausgelegt ist, dass er die Hilfsschaltung (9) mit dem Ausgang des Inverters (2) verbindet.

3. Widerstandsschweißeinheit nach Anspruch 2, **dadurch gekennzeichnet, dass** die elektrischen Mittel (14) einen zweiten Abwärtstransformator (12) umfassen, der am Eingang mittels zweiter Leiter (13a, 13b) mit der Hilfsschaltung (9) und am Ausgang mit einer Stromgleichrichtereinrichtung (14) verbunden ist, welche am Ausgang mit Elektroden (15) der zweiten Schweißpistole (11) verbunden ist, wobei der zweite Transformator (12) und die Gleichrichtereinrichtung (14) in der zweiten Schweißpistole (11) untergebracht sind.

4. Widerstandsschweißeinheit nach Anspruch 3, **dadurch gekennzeichnet, dass** der zweite Transformator (12) vom Mittelanzapftyp ist und dass die Strorngleichrichtereinrichtung (14) vom Typ mit zwei Halbwellen ist.

## Revendications

1. Unité de soudage par résistance (1), en particulier pour soudage à courant élevé, comprenant un onduleur (2) qui est alimenté par une source électrique triphasée (3) et est adapté pour fournir en sortie une tension alternative dont la fréquence est prédéfinie par un moyen de commande de soudage, ledit onduleur (2) étant connecté en série à un premier transformateur abaisseur de tension (5) dont les bornes de sortie sont reliées à un moyen redresseur de courant (6) pour alimenter, via des premiers conducteurs (7a, 7b), un premier pistolet de soudage (7), **caractérisée en ce qu'**elle comprend un moyen de sélection (8) qui est placé entre ledit onduleur (2) et ledit premier transformateur abaisseur de tension (5) afin d'alimenter en courant un deuxième pistolet de soudage (11) qui comporte des moyens électriques (12, 14) qui sont aptes à fournir un courant continu audit deuxième pistolet de soudage (11).

2. Unité de soudage par résistance selon la revendication 1, **caractérisée en ce que** ledit moyen de sélection (8) comprend un commutateur (8a) pour brancher un circuit auxiliaire (9), ledit commutateur (8a) étant adapté pour connecter ledit circuit auxiliaire (9) à la sortie dudit onduleur (2).

3. Unité de soudage par résistance selon la revendication 2, **caractérisée en ce que** lesdits moyens électriques (14) comprennent un deuxième transformateur abaisseur de tension (12) qui est connecté en entrée, au moyen de deuxièmes conducteurs (13a, 13b), audit circuit auxiliaire (9) et en sortie à un dispositif redresseur de courant (14), qui est connecté en sortie aux électrodes (15) dudit deuxième pistolet de soudage (11), ledit deuxième transformateur (12) et ledit dispositif redresseur (14) étant logés dans ledit deuxième pistolet de soudage (11).

4. Unité de soudage par résistance selon la revendication 3, **caractérisée en ce que** ledit deuxième transformateur (12) est du type à prise médiane et **en ce que** ledit dispositif redresseur de courant (14) est du type à deux alternances.
